# EUROPEAN PATENT SPECIFICATION

(11) **EP 3 479 614 B1**
(45) Date of publication and mention of the grant of the patent: **16.10.2024**
(21) Application number: 17819420.5
(22) Date of filing: 30.06.2017
(51) Int. Cl.: H04W 12/047, H04W 12/041, H04W 12/08, H04W 36/00, H04L 9/32

(54) **SECURE COMMUNICATIONS**
SICHERE KOMMUNIKATION
COMMUNICATIONS SÉCURISÉES

(30) Priority: 01.07.2016 IN 201641022732
(43) Date of publication of application: 08.05.2019
(73) Proprietor: Nokia Technologies Oy, 02610 Espoo (FI)
(72) Inventor: ALI, Amaanat, 02250 Espoo (FI); SCHNEIDER, Peter, 83607 Holzkirchen (DE); SÄILY, Mikko, 07150 Laukkoski (FI); VIJAY, Arnesh, 54-130 Wroclaw (PL)
(74) Representative: Page White Farrer
(86) International application number: PCT/FI2017/050494
(87) International publication number: WO 2018/002447

(56) References cited:
- EP-A1- 2 557 890
- WO-A1-2013/024435
- WO-A1-2015/085273
- WO-A1-2015/085273
- WO-A1-2016/021822
- WO-A1-2016/105570
- US-A1- 2016 135 247
- US-A1- 2016 135 247
- NOKIA ET AL: "Discussion of RRC States in NR", vol. RAN WG2, no. Nanjing, China; 20160523 - 20160527, 13 May 2016 (2016-05-13), XP051089706, Retrieved from the Internet <URL:http://www.3gpp.org/ftp/tsg_ran/WG2_RL2/TSGR2_94/Docs/> [retrieved on 20160513]
- "3 rd Generation Partnership Project; Technical Specification Group Radio Access Network; Evolved Universal Terrestrial Radio Access (E-UTRA); User Equipment (UE) procedures in idle mode (Release 13)", 30 March 2016 (2016-03-30), XP051081782, Retrieved from the Internet <URL:http://www.3gpp.org/ftp/tsg_ran/WG2_RL2/Specifications/201603_final_specs_after_RAN_71/> [retrieved on 20160330]
- ERICSSON, HANDLING OF INACTIVE UES, 13 May 2016 (2016-05-13), XP051089658, Retrieved from the Internet <URL:http:// www.3gpp.org/ftp/tsg_ran/WG2_RL2/TSGR2_ 94/Docs/R2-163998 .zip> [retrieved on 20170926]
- NOKIA ET AL., DISCUSSION OF RRC STATES IN NR, 13 May 2016 (2016-05-13), XP051089706, Retrieved from the Internet <URL:http:// www.3gpp.org/ftp/tsg_ran/WG2_RL2/TSGR2_94/Docs/R2-163441 .zip> [retrieved on 20170926]
- "rd Generation Partnership Project; Technical Specification Group Services and System Aspects; 3GPP System Architecture Evolution (SAE; Security architecture (Release 13", 3GPP TS 33.401, 23 June 2016 (2016-06-23), XP055586799, Retrieved from the Internet <URL:http:// www.3gpp.org/ftp/Specs/archive/33_series/33.401 /3340 1-d30 .zip> [retrieved on 20170920]

## Description

This disclosure relates to secure communications and more particularly to signalling of security parameter information in a wireless communication system.

A communication system can be seen as a facility that enables communication between two or more devices such as user terminals, machine-like terminals, base stations and/or other nodes by providing communication channels for carrying information between the communicating devices. A communication system can be provided for example by means of a communication network and one or more compatible communication devices. The communication may comprise, for example, communication of data for carrying data for voice, electronic mail (email), text message, multimedia and/or content data communications and so on. Non-limiting examples of services provided include two-way or multi-way calls, data communication or multimedia services and access to a data network system, such as the Internet.

In a wireless system at least a part of communications occurs over wireless interfaces. Examples of wireless systems include public land mobile networks (PLMN), satellite based communication systems and different wireless local networks, for example wireless local area networks (WLAN). A local area wireless networking technology allowing devices to connect to a data network is known by the tradename WiFi (or Wi-Fi). WiFi is often used synonymously with WLAN. The wireless systems can be divided into cells, and are therefore often referred to as cellular systems. A base station provides at least one cell.

A user can access a communication system by means of an appropriate communication device or terminal capable of communicating with a base station. Hence nodes like base stations are often referred to as access points. A communication device of a user is often referred to as user equipment (UE). A communication device is provided with an appropriate signal receiving and transmitting apparatus for enabling communications, for example enabling communications with the base station and/or communications directly with other user devices. The communication device can communicate on appropriate channels, e.g. listen to a channel on which a station, for example a base station of a cell, transmits.

A communication system and associated devices typically operate in accordance with a given standard or specification which sets out what the various entities associated with the system are permitted to do and how that should be achieved. Communication protocols and/or parameters which shall be used for the connection are also typically defined. Non-limiting examples of standardised radio access technologies include GSM (Global System for Mobile), EDGE (Enhanced Data for GSM Evolution) Radio Access Networks (GERAN), Universal Terrestrial Radio Access Networks (UTRAN) and evolved UTRAN (E-UTRAN). An example communication system architectures is the long-term evolution (LTE) of the Universal Mobile Telecommunications System (UMTS) radio-access technology. The LTE is standardized by the 3rd Generation Partnership Project (3GPP). The LTE employs the Evolved Universal Terrestrial Radio Access Network (E-UTRAN) access and a further development thereof which is sometimes referred to as LTE Advanced (LTE-A). Since introduction of fourth generation (4G) services increasing interest has been paid to the next, or fifth generation (5G) standard.

Security of data communications from and to a communication device is of great importance. Typically the communications are secured based on security credentials such as security keys or other security parameters. A communication device can be provided with a security configuration, often referred to as security context, which comprises information about the security credentials and defines the credentials to be used when in communication with a particular cell. The security configuration can be updated according to the cell the device is connected to.

An issue relating to the security credentials relates to the update of the security credentials when a communications device moves from one cell to another. Signalling required to get the new appropriate credentials to update the security configuration can involve, in addition to the radio access network, one or more elements of core network. This can introduce latency and prevent seamless data communications in case of a handover.

It is noted that the above discussed issues are not limited to any particular communication environment, but may occur in any appropriate communication system where security credential may need to be changed when a device moves from a cell to another.

United States patent application publication number US 2016/135247 A1 relates to Semi-connected state operation for UEs in multiple-access. In the semi-connected state, UEs may monitor system information and paging, and mobility may be UE-controlled. Base stations may determine whether to transition UEs from the connected state to the semi-connected state based on capabilities, priority, data connections, or loading conditions. Base stations may maintain context information and logical traffic connections for UEs while UEs continue to be served by the base station in the semi-connected state. Thus, when a transition from the semi-connected state to the connected state occurs, the base station does not have to re-establish security parameters, nor re-establish logical traffic connections within the network for carrying control plane and user plane data for the UE. Context information for semi-connected state UEs may be shared between neighbouring base stations or base stations within a context area.

European patent application publication number EP 2,557,890 A1 relates to a method, mobile device and radio access network RAN for suspending and reestablishing a radio resource control (RRC) connection.

Nokia et al: "Discussion of RRC states in NR", 3GPP Draft R2-163441 provides a discussion relating to mobility framework architecture of RRC states in New Radio.

International patent application publication number WO 2015/085273 A1 relates to techniques and devices directed towards efficient offloading and/or aggregation of resources by providing different levels of connection management in a network.

International patent application publication number WO 2013/024435 A1 relates to conducting machine-to-machine packet transmission of a machine device configured in a connected mode by using a bearer connection with a security context.

"3rd Generation Partnership Project; Technical Specification group Radio Access Network; Evolved Universal Terrestrial Radio Access (E-UTRA); User Equipment (UE) procedures in idle mode (Release 13)" is a communication standards text relating to user equipment procedures in Idle mode.

The present invention is defined by the appended independent claims. Certain more specific aspects are defined by the dependent claims.

Embodiments of the invention aim to address one or several of the above issues.

In accordance with an embodiment there is provided a method comprising
determining a cell reselection at a communication device in an intermediate radio resource control state where the communication device is inactive but connected to a radio access system,
subsequent to the determining, initiating communication of security credential information with a selected cell of the radio access system while the communication device is in the intermediate radio resource control state, and
communicating with the selected cell based on a security configuration according to the security credential information.

In accordance with an embodiment there is provided a method comprising
receiving at a cell of a radio access system from a communication device security credential information, the communication device being in an intermediate radio resource control state where the communication device is inactive but connected to the radio access system, the security credential information being received following determination of a cell reselection by the communication device, and the cell being the selected new cell, and
communicating with the communication device in the intermediate radio resource control state based on a security configuration according to the security credential information.

According to another aspect there is provided apparatus for a communication device, the apparatus comprising at least one processor, and at least one memory including computer program code, wherein the at least one memory and the computer program code are configured, with the at least one processor, to
determine a cell reselection at a communication device in an intermediate radio resource control state where the communication device is inactive but connected to a radio access system, subsequent to the determining, initiate communication of security credential information with a selected cell of the radio access system while the communication device is in the intermediate radio resource control state, and communicate with the selected cell based on a security configuration according to the security credential information.

According to yet another aspect there is provided an apparatus for a network entity providing a cell of a radio access for system, the apparatus comprising at least one processor, and at least one memory including computer program code, wherein the at least one memory and the computer program code are configured, with the at least one processor, to receive from a communication device security credential information, the communication device being in an intermediate radio resource control state where the communication device is inactive but connected to the radio access system, the security credential information being received following determination of a cell reselection by the communication device, and the cell being the selected new cell, and cause communication with the communication device in the intermediate radio resource control state be based on a security configuration according to the security credential information.

In accordance with a more detailed aspect the security configuration used for communication with the selected cell comprises a security configuration used by the communication device for communication with an old cell. The selected cell can be informed of security configuration used for the communication. Alternatively, or in addition, information of the old cell may be provided.

The radio access system may comprise a 4th or 5th generation radio access network (RAN) according to 3GPP specifications. The intermediate radio resource control state may comprise a configurable radio resource control (RRC) state defined between RRC idle and RRC connected states according to the 3GPP specifications.

The reselection may relate to handover of the communication device from an old cell to a new cell associated with an eNodeB (eNB). The communication device may be handed over from an old cell provided by a first eNB to a new cell provided by a second eNB.

Communication of security credential information may be initiated immediately after determining cell reselection. A message authentication code may be computed for an integrity (MAC-I) vector based on security credentials used by the communication device before the reselection, and using the computed MAC-I vector for said communication of security credential information. The communication may comprise sending a cell update request with a cause value indicating a need for a security update. An indication of an old cell for which the communication device has a security configuration and/or of an existing security configuration may also be provided.

A deferred security credential update may be performed after determining cell reselection. It can be waited, after determination of cell reselection, until there is data to be transmitted to the new cell. An indication may then be signalled to the new cell that an existing security configuration with an old cell is to be used, and the existing security configuration is used for securing communications with the new cell. After security update information is received from the new cell the security configuration is updated accordingly.

In accordance with a specific embodiment, subsequent to said determining of cell reselection, an update of security configuration is requested using the existing security configuration for securing communications with the new cell.

Also, subsequent to said initiating communication of security credential information, the communication device may receive from the radio access system information for update of the security configuration of the communication device, update the security configuration of the communication device, and continue communications with the new cell based on the updated security configuration.

Update of the security configuration may be triggered by a message from radio access system. The message may be one of a paging message, a command to update and a message comprising new security credentials.

New security credentials may be derived autonomously at the communication device. The selected cell can be infeed of the derived security credentials using the existing security configuration for securing communications with the selected cell.

Information regarding security credentials used by the communication device may be signalled between at least two eNodeBs.

In accordance with a possibility, subsequent to receiving of security credential information at an entity of the radio access system, the entity may determine a possibility of not being capable of processing communications according to the security credential information. In response thereto use of security configuration according to the security credential information may be rejected and security configuration update triggered. The received communication may also be forwarded to the old cell for processing.

The security configuration update subsequent to cell reselection can be handled in its entirety, or substantially in its entirety, within the radio access network.

According to an embodiment a chain of handovers is determined where after fresh key material is retrieved from the core network. Security configuration update based on the fresh key material is then triggered.

A device and/or a station and/or a communication system comprising an apparatus configured to provide at least one of the embodiments can also be provided. The device may comprise a communication device such as a user equipment (UE) or another node capable of wireless communication. The station can comprise a base station such as an eNodeB (eNB).

A computer program comprising program code means adapted to perform the herein described methods may also be provided. In accordance with further embodiments apparatus and/or computer program product that can be embodied on a computer readable medium for providing at least one of the above methods is provided.

Various other aspects and further embodiments are also described in the following detailed description of examples embodying the invention and in the attached claims.

The invention will now be described in further detail, by way of example only, with reference to the following examples and accompanying drawings, in which:
Figure 1 shows a schematic example of a wireless communication system where the invention may be implemented;
Figure 2 shows an example of a communication device;
Figure 3 shows an example of control apparatus;
Figures 4 and 5 illustrate certain principles of key derivation;
Figures 6A and 6B show examples of state engines; and
Figures 7, 8 and 9 are flowcharts in accordance with certain embodiments.

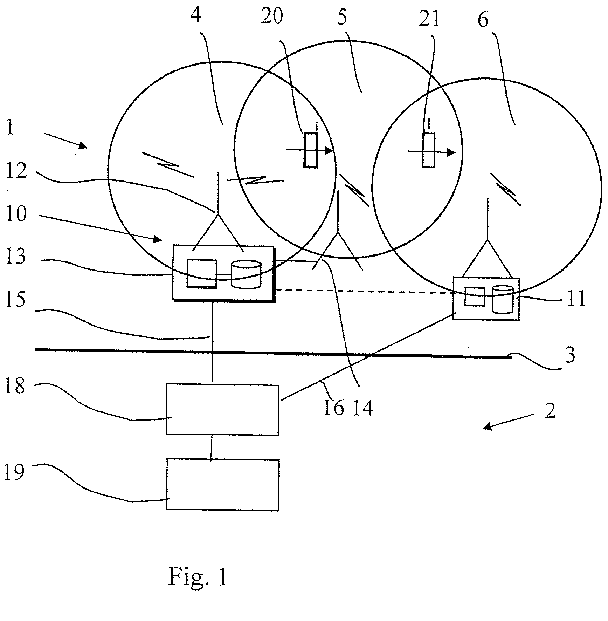

In the following certain exemplifying embodiments are explained with reference to a wireless communication system serving communication devices adapted for wireless communication. To assist better understanding of the described examples of providing reduced signalling in wireless systems with security features certain general principles of wireless systems are first briefly explained with reference to Figures 1 to 4.

A communication device 20, 21 can be used for accessing various services and/or applications provided via cells 4, 5, 6 of a cellular system. In a wireless communication system the access can be provided via wireless access interfaces between wireless communication devices and one or more base stations of a radio access network 1. Each mobile device and base station may have one or more radio channels open at the same time and may receive signals from more than one source.

The mobile communication devices can move from a cell to another, as illustrated by arrows on top of the devices 20 and 21 in Figure 1. The process of handling the moving from a cell to the other is called handover. Handovers can be provided, for example, in wireless environment comprising one or more fifth generation (5G) radio access networks (RAN). A part of handover procedure is known as cell reselection.

A base station site can provide at least one cell. In the highly schematic Figure 1 example, a base station site 10 comprising a controller 13 and base station apparatus 12 and 14 is shown to provide a plurality of cells 4 and 5, respectively. In the Figure cell 4 is provided by antenna apparatus of station 12 in one location, and at least one further cell is provided by a remote radio head 14. It is noted that this exemplifying arrangement is only shown for illustrative purposes, and that e.g. antenna apparatus 12 can provide more than one cell. The relevance in view of certain examples described below is that the controller 13 of the base station site 10 can control access and devices accessing the radio access network 1 in a number of cells.

In addition to the base station site 12, at least one other cell can also be provided by means of another base station or stations. This possibility is denoted by base station 11 in Figure 1. Signalling between base stations, and controllers thereof, can be provided via an appropriate interface, for example X2 interface. This is denoted by the dashed line between the control entities 13 and 11.

A wireless system is typically divided between a radio access system 1, typically called radio access network (RAN) and a core network (CN) 2. The division is denoted by line 3. The core network can comprise elements such as mobile management entity (MME) 18, home subscriber server (HSS) 19 and so forth. Connection between base station sites of the radio access network (RAN) and core network (CN) element can be provided via appropriate interfaces 15, 16. The connection can be e.g. via a S1 interface.

A communication device can access a communication system based on various access techniques, for example those based on the third Generation Partnership Project (3GPP) specifications. A non-limiting example of mobile architectures is known as the Evolved Universal Terrestrial Radio Access Network (E-UTRAN). A non-limiting example of base station of a cellular system is what is termed as a NodeB or E-UTRAN NodeB (eNB / ENodeB) in the vocabulary of the 3GPP specifications. The eNBs may provide E-UTRAN features such as user plane Radio Link Control/Medium Access Control/Physical Layer Protocol (RLC/MAC/PHY) and control plane Radio Resource Control (RRC) protocol terminations towards mobile communication devices. At least some of the stations may be arranged to operate on the unlicensed radio spectrum.

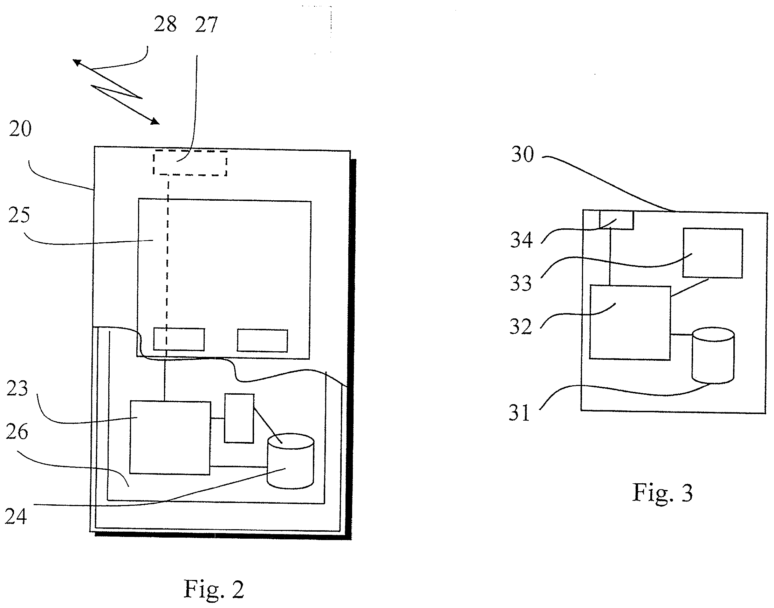

Figure 2 shows a schematic, partially sectioned view of a communication device 20 that a user can use for communications. Such a communication device is often referred to as user equipment (UE) or terminal. An appropriate communication device may be provided by any device capable of sending and receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia, positioning data, other data, and so on. Users may thus be offered and provided numerous services via their communication devices. Non-limiting examples of these services include two-way or multi-way calls, data communication or multimedia services or simply an access to a data communications network system, such as the Internet.

A mobile device is typically provided with at least one data processing entity 23, at least one memory 24 and other possible components 29 for use in software and hardware aided execution of tasks it is designed to perform, including control of access to and communications with base stations and/or other user terminals. The tasks can include operation relation to mobility management such as handling handovers and cell reselections. Further, the tasks can also relate to security aspects of the communications. The data processing, storage and other relevant control apparatus can be provided on an appropriate circuit board and/or in chipsets. This apparatus is denoted by reference 26.

A user may control the operation of the device 20 by means of a suitable user interface such as key pad, voice commands, touch sensitive screen or pad, combinations thereof or the like. A display 25, a speaker and a microphone are also typically provided. Furthermore, a mobile communication device may comprise appropriate connectors (either wired or wireless) to other devices and/or for connecting external accessories, for example hands-free equipment, thereto.

The device 20 may receive and transmit signals 28 via appropriate apparatus for receiving and transmitting signals. In Figure 2 transceiver apparatus is designated schematically by block 27. The transceiver may be provided for example by means of a radio part and associated antenna arrangement. The antenna arrangement may be arranged internally or externally to the mobile device. A wireless communication device can be provided with a Multiple Input / Multiple Output (MIMO) antenna system.

Figure 3 shows an example of a control apparatus 30 for a station, for example to be coupled to and/or for controlling one of the stations 11, 12 and 14 of Figure 1. The control apparatus 30 can be arranged to provide control on configurations used by the communications devices accessing the station, information processing and/or communication operations. A control apparatus can be configured to provide control functions in association with generation, communications, and interpretation of control information. The control apparatus 30 comprises at least one memory 31, at least one data processing unit 32, 33 and an input/output interface 34. Via the interface the control apparatus can be coupled to the relevant node. The control apparatus 30 can be configured to execute an appropriate software code to provide the control functions.

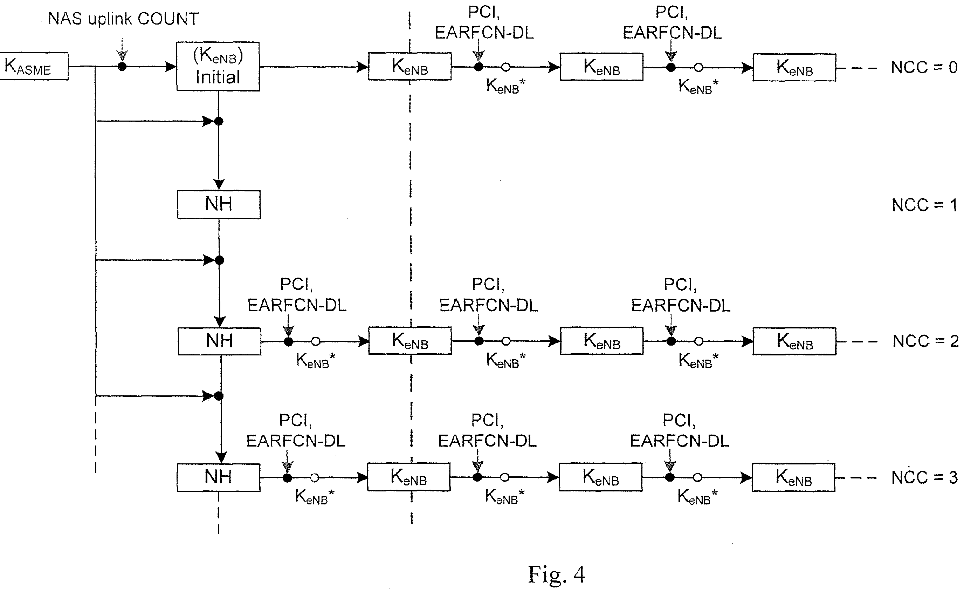

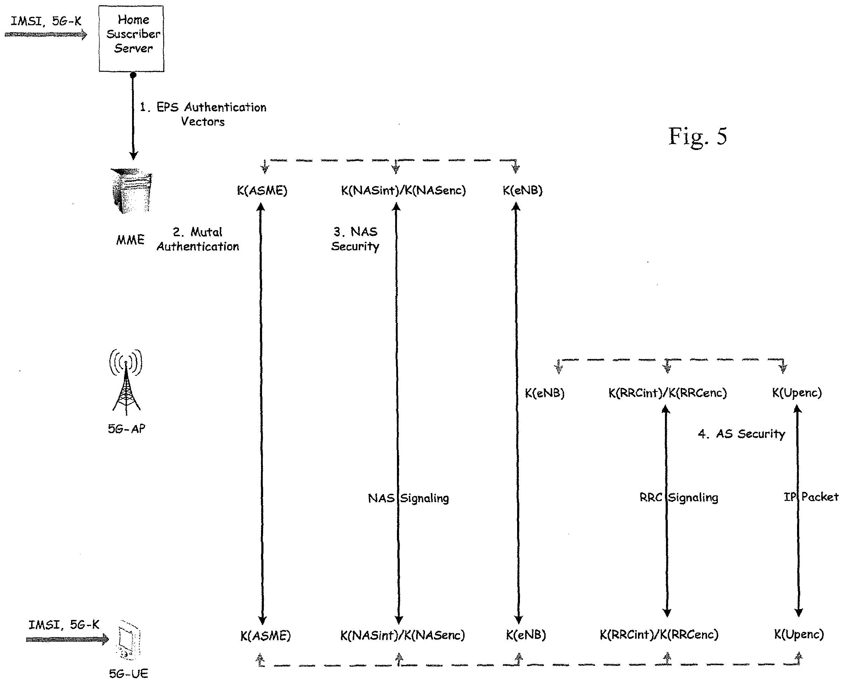

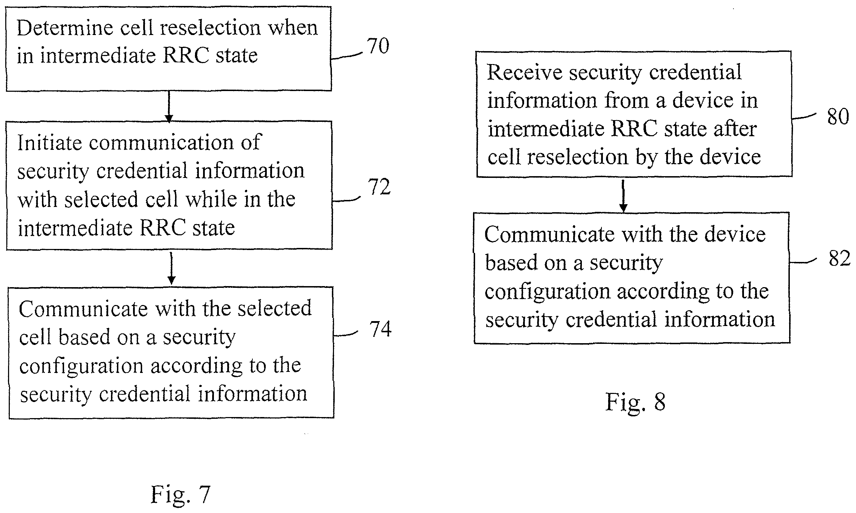

In certain current networks, such as High Speed Packet Access (HSPA) based networks, a feature known as seamless transition allows a UE to start data transfer immediately upon making a random access channel (RACH) preamble access without having to exchange any signalling messages. Also mobility of the UE from one cell to another (including changes of radio network controller; RNC) are handled in such a manner that the UE may still receive data seamlessly. It has been proposed that 5G network security architecture is to be based on the LTE in order to have a stronger security architecture. In 4G LTE, it is mandatory for the UE to update its security configuration based on horizontal or vertical key derivation when it moves from a cell to another cell. Figure 4 shows as an example a model for the handover key chaining according to Figure 7.2.8.1-1 of 3GPP TS 33.401, Rel-13, V13.3.0. 5G keying hierarchy, if 4G security architecture is assumed as a baseline, can be arranged as shown in Figure 5. By way of explanation, horizontal key derivation is understood to take place when K_eNB* is derived from the currently active K_eNB. Vertical key derivation is understood to occur when K_eNB* is derived from a next-hop (NH) parameter. In 4G both the horizontal and vertical key derivation sequence are carried out using an explicit signalling message between the eNB and the UE. If the eNB changes, the signalling would be with the new eNB.

LTE type security parameter handling however may cause certain issues when applied to systems such as those based on 5G. One of the issues is how to update security keys upon cell reselection. This can become problematic because of a basic requirement of 5G that the device being handed over shall be able to start uplink data transmission immediately upon cell reselection, and shall not wait for signalling procedures to be completed to avoid any additional latency before first packet transmission. However, as illustrated by Figure 5, signalling procedure involving core network entities such as MME and HSS may need to be invoked.

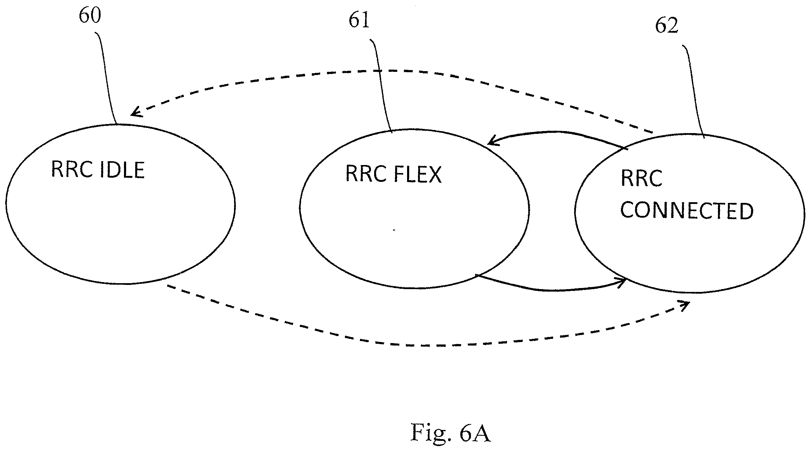

In the herein described examples seamless continuation of data transmission is provided based on operation utilising a radio resource control model where three different states are provided for radio resource control. A schematic example of this principle is illustrated in Figure 6A. More particularly, an intermediate radio resource control (RRC) state 61 is provided between the RRC Idle state 60 and RRC connected state 62 for use by communication devices during times of no data transmission and/or reception activity to enable the device to be connected but inactive. In Figure 6A the dashed arrow-ended lines illustrate the conventional transition between the states whereas the solid arrow-ended lines illustrate the transition in the new model between the intermediate RRC inactive but connected state and the fully connected RRC state. Unlike the current radio network systems the proposed intermediate state enables operation where the communication device does not have to make bulky signalling transitions from RRC-IDLE state to RRC_CONNECTED state before data transmission may be initiated.

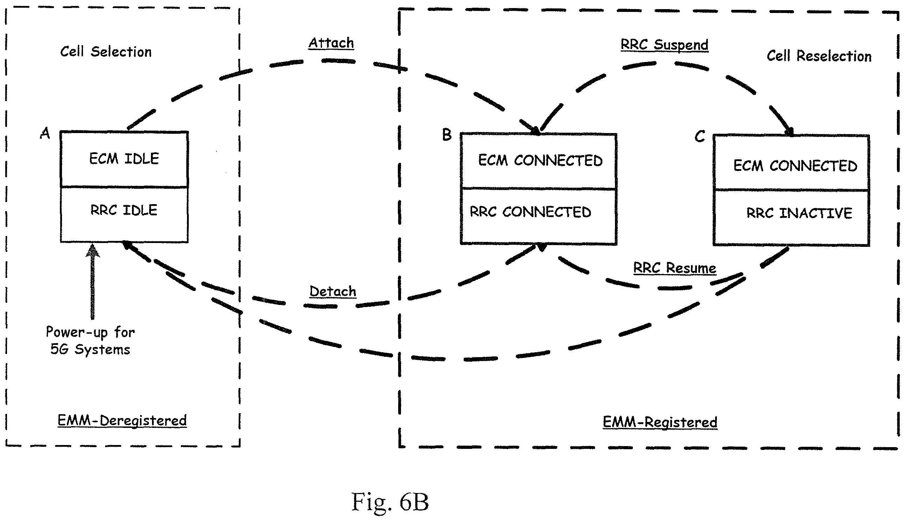

Figure 6B shows another example in the context of Evolved Packet System (EPS) Mobility Management (EMM). A UE can attach to a network and use services regardless of its location by exchanging control signalling messages with the network using Non-Access Stratum (NAS) signalling between the UE and an MME. EMM connection management can be performed via EPS Connection Management (ECM). An ECM connection comprises an RRC (Radio Resource Control) connection between the UE and the eNB and an S1 signalling connection to the MME. Figure 6B shows three states A, B and C of these functions. In state A both the ECM and RRC are in idle state and the device is EMM-deregistered. In state B both the ECM and RRC are in connected state. In addition to these states, an intermediate state C is provided where RRC is in inactive state while ECM is in connected state. When in state B or C, the device is EMM-registered.

When a device enters the system, e.g. is powered up, a cell selection is provided in state A. In the example of Figure 6B cell reselection tales place in state C.

The intermediate state enables operation where previously exchanged semi-static information is not discarded but rather certain parts of the access network context are maintained. In the herein described embodiments update of the security configuration or context at the communication device is facilitated during cell handovers by the use of at least some existing security information that has been retained. The intermediate RRC state may be provided such that the communication devices can have "always on connections" from the core network perspective. The security configuration update procedure can be handled at local level, i.e. within the RAN. Signalling towards the core network can be even non-existent, or at least kept at its minimum. The intermediate RRC state can be configured to allow a communication device to remain in RRC connected mode for relatively long periods of time whilst minimizing the network and communication device resource requirements. The state can be flexibly configurable enabling tailoring and optimization of the transitions between the intermediate and connected RRC states.

The security features are based on use of configurable security credentials, for example keys, at the communicating devices that can be updated during, or subsequent to handover of a communication device from a cell to another cell.

Figure 7 is an example of operation at a communication device arranged to use the intermediate RRC state for handling security credential after cell reselection. In the method cell reselection is determined at 70 when the communication device is in an intermediate radio resource control state where the communication device is inactive but connected to a radio access system. At 72, subsequent to the determining, communication of security credential information is initiated with a selected cell of the radio access system. At this stage the communication device is in the intermediate radio resource control state. At 74 data is communicated with the selected cell based on a security configuration according to the security credential information. More detailed examples of the possible security credential information, processing thereof, security configurations, and updates thereof are given below.

Figure 8 shows a scenario at the radio access system side, more particularly at a controller of the selected cell processing signalling from the communication device. In the method security credential information is received at 80 from the communication device which is in an intermediate radio resource control state, i.e. inactive but connected to the radio access system. The information is received following determination of a cell reselection by the communication device. Communications with the communication device which is still in the intermediate radio resource control state are based at 82 on a security configuration according to the security credential information.

The security configuration used for communication with the selected new cell can comprise an existing security configuration that has been used by the communication device for communication with an old cell. The selected cell can be informed of the existing security configuration used by the communication device for the communication. Information of the old cell may also be provided. Information of the security configuration may be derived based on said information of the old cell.

The communication may comprise sending of a cell update request with a cause value that has been set so as to indicate a need for a security update. The request can also include an indication of such an old cell for which the communication device has a security configuration and/or of an existing security configuration.

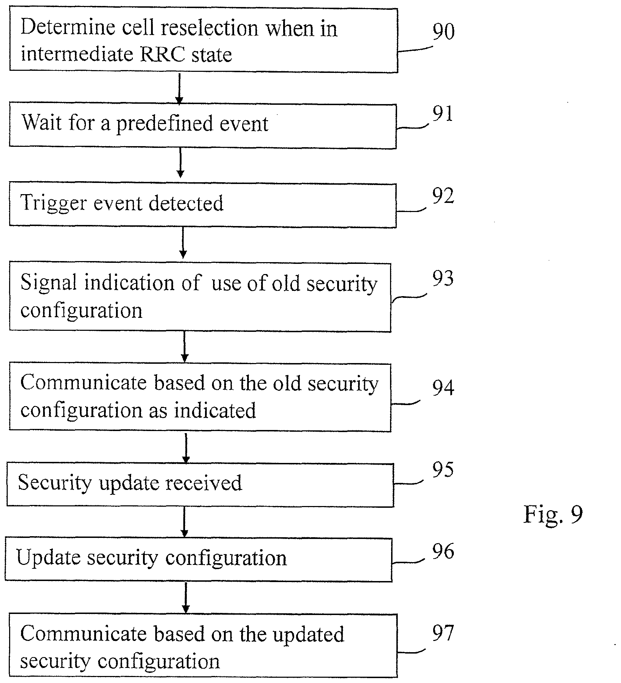

Deferred signalling may be provided. An example for this is shown in Figure 9. According to the example the communication device waits at 91 for a predefined event after the determination of cell reselection at 90, for example waits until there is data to be transmitted to the new cell and/or there is a page or another message triggering communications from the access network. After the triggering event is determined at 92, an indication is signalled at 93 to the new cell that an existing security configuration with an old cell is to be used. The existing security configuration is then used at 94 for securing communications with the new cell until security update information is received at 95 from the new cell and the security configuration is updated accordingly at 96. Communication can then continue seamlessly at 97 using the updated configuration.

In the following some more detailed exemplifying mechanisms for handling security configuration update in fifth generation (5G) networks are described. In the following detailed example for a mechanism of key derivation during UE mobility the intermediate state is referred to as RRC_FLEX state. A UE in RRC_FLEX state can be arranged to behave substantially similarly as a UE in the CELL_PCH/URA_PCH state in High Speed Packet Access (HSPA) network (PCH = Paging Channels).

Different possibilities for providing security configuration before initiating transmission when assigned to a configurable RRC state in 5G networks are possible. The mechanisms described below are in particular configured for seamless downlink and uplink data transmission during cell handovers in 5G radio access networks. This can be achieved because of reduced signalling towards the 5G core network. Reduction in signalling can be achieved by the above referred configurable Radio Resource Control (RRC) state, called herein RRC_FLEX state. This RRC state is intended for UEs with always-on connection from core network perspective. The RRC_FLEX state can be used by devices such as UEs during times of inactivity, i.e. when there is no data transmission/reception activity.

The need for information of security credentials and update thereof can arise is various handover scenarios. According to a first handover scenario an UE attached to an eNB moves to a new cell of the same eNB. That is, an UE can switch from an old cell to a new cell in an eNB. This is the case with device 20 of Figure 1 moving from cell 4 to cell 5 both controlled by access network controller 13. According to another handover scenario a UE moves to a new cell in a different eNB. This is illustrated with device 21 of Figure 1 moving from cell 5 to cell 6 controlled by different access network controllers 13 and 11.

According to a possibility immediate signalling procedure is initiated by the UE to update the security credentials thereof. Signalling can be immediately initiated in both the intra-eNB and in the inter-eNB (eNB to eNB) transfer. The signalling can be initiated immediately by the UE in the RRC_FLEX state using e.g. a Message Authentication Code for Integrity (MAC-I) vector which is computed using earlier security keys to update security keys used by the UE. The UE can make a cell update request with an uplink access where the 'Cause Value' parameter is set to a value indicating need for new security credentials, for example to 'Security Update Required'. The cell update request can include a MAC-I vector computed using earlier security keys. Thus an existing RRC message can be utilised, with modification so that a cause value 'Security Update Required' is made available for the UE. Use of the new value can be triggered by the UE upon determining cell reselection. This message can also indicate the previous cell where the UE had valid security context.

Operation where the UE does not update the keys immediately but instead waits until it has uplink data to transmit is also possible. A possibility is for an UE to wait until the network pages the UE. In such a non-instant scenario the current security configuration can be used to protect signalling related to the change of security configuration until the network has provided a security update with a new key configuration in the downlink direction. The network can page the UE asking for explicit security update. If the network knows the cell the UE is in then the credential update may be indicated by a downlink (DL) data protocol data unit (PDU).

According to a possibility the UE can initiate, whilst using the old configuration, a signalling procedure indicating the need for a security update. Once the procedure is completed, the UE can continue to transmit data in the uplink using the new security credentials received from the network.

A new RRC message may be configured to indicate for the network that a security update is required by the UE. The RRC message can be triggered by the UE upon determining a cell reselection. The message may contain a pointer to the key material (e.g. key index) the UE has been using and/or is using at the time of sending the message.

According to a possibility the UE protects UL data it needs to send with its current security configuration and indicates this in the uplink transmission to the radio network. This can be indicated to a new eNB, if this has changed. The network can acknowledge the uplink transmission and order a security update in the downlink direction. Upon reception of the update of the security configuration, the UE switches to the new key configuration and continues the transmission in the uplink using the updated configuration.

An UE can also be configured to signal a secured uplink message to the new cell without any preceding signalling. The message can be configured to indicate the previous cell. If the eNB has changed, the eNBs can exchange appropriate signalling e.g. over the X2 interface to allow the new eNB to process the packet. The network has the option of switching to the new set of security keys based with DL DATA PDU or indicate the switch of the security keys by a separate RRC message in the downlink.

According to a possibility a UE switches autonomously based on horizontal key derivation and protects uplink data with the new keying material. The UE indicates this to the radio network in the uplink transmission. The network switches internally and acknowledges the uplink transmission in the downlink direction.

The UE can send such a secured uplink message without any preceding signalling. The UE indicates the previous cell where the UE had an established security context and indicates that it has already performed autonomous horizontal derivation. This triggers the network to also update the security keys. This can be based on interaction of two eNBs in case the eNB has changed. The network has the option of switching security parameters later on, based with DL DATA PDU immediately or indicate the switch of the security keys by a separate RRC message in the downlink.

It is also possible that an UE does not update the security keys immediately upon reselection but waits until the network pages it. The network can order the UE to initiate a security update as explained above in the paging message. The network may also send downlink data using the current security configuration and indicate this for the UE in the downlink transmission. In addition, the network can command a switch to new security credentials. The UE can then process the commands serially by receiving the downlink transmission with current security key configuration and then updating the security key configuration based on the network command. In the next transmissions from network and the UE the updated key configuration is used.

Certain specific considerations may be needed in certain scenarios where an UE moves to a new cell in a different eNB.

In accordance with a possibility the UE does not update the security keys immediately after cell reselection but waits until it has uplink data to transmit. In this case the UE can protect UL data with its current security configuration and indicate the used security configuration in the uplink transmission. The indication can be a pointer to the old eNB. The new eNB can be arranged to contact the old eNB in order to fetch the security configuration that was used by the UE before the relocation to secure uplink messages. The new eNB can then provide a security update signalling in the downlink direction.

There may be several different sets of security algorithms specified for a radio interface. If the new eNB is not arranged to support the security algorithms used by the old eNB, the new eNB may not be able to process the uplink message itself. This can be resolved in various ways. For example, the network can be designed such that an operator can avoid use of security algorithms that are only supported by a part of the eNBs. Also, the new eNB may reject the uplink message indicating use of the existing configuration and trigger a security configuration update instead. According to a further possibility, the new eNB may transmit the uplink message received from the UE to the old eNB, where after the old eNB can process the message using the old configuration. The handling of messages can be provided in various manners. According to a possibility the messages are transferred to the old eNB until security update is completed. E.g. the new eNB may trigger a security update in (possible) coordination with the old eNB. The signalling may involve the UE.

It is also possible that several handovers happen in a row. In such a case it may be possible that all eNBs in the row are able to derive the security configurations used further down the row. This may enable eavesdropping or even modifying of the communication between UE and current eNB. In certain scenarios this may be considered as a security risk, as one of these eNBs could be compromised, for example be controlled by an attacker. To address this a procedure can be introduced by which an eNB can retrieve new keying material from the core network (in LTE, this would be the pair Next Hop, Next Hop Chain Counter)) suitable to perform a vertical key derivation. The eNB can then trigger a security configuration update using vertical key derivation. Such a procedure can be made optional to use. The new eNB can be configured to be capable of deciding whether to apply the procedure or not, e.g. based on appropriate policies. Getting fresh key material from the core network and performing the update may be piggy-backed on other messages that need to be exchanged anyway. Messages such as Path Switch Request/Response may be used here, for example.

The above examples may provide advantage in that a communication device is able to seamlessly transmit and/or receive data with lightweight signalling after cell change. Security contexts can be handled during RRC_FLEX mode mobility in 5G RAN with none or minimal interactions/signalling towards the core network. Layer 3 security configuration may be provided without signalling between 5G eNB and core network mobility management entity (MME). Layer 3 identifiers and security information after cell change during RRC_FLEX state can be maintained in RAN, enabling low latency system access in the target cell. Security keys can be refreshed after tracking area update as part of the S1 path switch update, thus the security key refresh will not introduce additional signalling. The proposed architecture is believed to work for all the scenarios for 5G i.e. Centralized Baseband and Centralized Cloud as well as Distributed RAN with stand-alone access points.

Appropriate means can be provided for implementing the above described functions. The means can be software and/or hardware based, and are not limited by the examples given in this specification.

The required data processing apparatus and functions may be provided by means of one or more data processors. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

An appropriately adapted computer program code product or products may be used for implementing the embodiments, when loaded or otherwise provided on an appropriate data processing apparatus, for example for causing use of specific security credential and/or updates thereof, control operation of the devices and communication of information between the various devices. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

## Claims

1. An apparatus for a communication device (20), the apparatus comprising at least one processor, and at least one memory including computer program code, the at least one memory and the computer program code configured to, with the at least one processor, cause the apparatus to at least:
determine (90) a cell reselection from an old cell to a selected cell at the communication device (20) in an intermediate radio resource control state where the communication device (20) is inactive but connected to a radio access system;
subsequent to the determining, initiate communication (93) of security credential information of the old cell with the selected cell of the radio access system while the communication device (20) is in the intermediate radio resource control state;
communicate (94) with the selected cell based on a security configuration according to the security credential information;
perform a deferred security credential update after the determining of the cell reselection;
wait, after the determination of the cell reselection, until there is uplink data to be transmitted to the selected cell, and then:
signal an indication to the selected cell that an existing security configuration with an old cell is to be used and use the existing security configuration for securing communications with the selected cell,
receive security update information from the selected cell, and
update the security configuration accordingly.

2. An apparatus according to claim 1, configured to communicate a cell update request with a cause value indicating a need for a security update.

3. An apparatus according to claim 2, being further configured to communicate, in the cell update request, an indication of an old cell for which the communication device (20) has a security configuration and/or of an existing security configuration.

4. An apparatus (20) according to any of claims 1 to 3, configured to operate in a radio access system comprising a 4^{th} or 5^{th} generation radio access network (RAN) according to 3GPP specifications, and wherein the intermediate radio resource control state comprises a configurable radio resource control (RRC) state defined between RRC idle and RRC connected states according to the 3GPP specifications.

5. An apparatus (20) according to any of claims 1 to 4, wherein the old cell and the selected cell are associated with an eNodeB, or wherein the old cell is provided by a first eNodeB and the selected cell is provided by a second eNodeB.

6. An apparatus (20) according to any of claims 1 to 5, configured to use a message authentication code for integrity (MAC-I) vector computed based on security credentials used by the communication device before the reselection for communication of security credential information.

7. An apparatus (20) according to any of claims 1 to 6, configured to, subsequent to said determining of the cell reselection, request for an update of security configuration while the existing security configuration is used for securing communications.

8. A system comprising:
an apparatus for a communication device (20) according to any preceding claim; and
an apparatus (30) for a network entity providing a selected cell of a radio access for system, the apparatus (30) comprising at least one processor, and at least one memory including computer program code, the at least one memory and the computer program code configured to, with the at least one processor, cause the apparatus (30) to at least:
receive (93) from the communication device (20) information of the security credential information of the old cell with the selected cell of the radio access system while the communication device (20) is in an intermediate radio resource control state where the communication device (20) is inactive but connected to the radio access system; and
cause said communication (94) with the communication device (20) in the intermediate radio resource control state be based on the security configuration according to the security credential information.

9. A computer program comprising instructions for causing an apparatus to perform at least the following:
determine (90) a cell reselection from an old cell to a selected cell at a communication device (20) in an intermediate radio resource control state where the communication device (20) is inactive but connected to a radio access system;
subsequent to the determining, initiate (93) communication of security credential information of the old cell with the selected cell of the radio access system while the communication device (20) is in the intermediate radio resource control state;
communicate (94) with the selected cell based on a security configuration according to the security credential information;
perform a deferred security credential update after the determining of the cell reselection;
wait, after the determination of the cell reselection, until there is uplink data to be transmitted to the selected cell, and then:
signal an indication to the selected cell that an existing security configuration with an old cell is to be used and use the existing security configuration for securing communications with the selected cell,
receive security update information from the selected cell, and
update the security configuration accordingly.

## Patentansprüche

1. Einrichtung für eine Kommunikationsvorrichtung (20), wobei die Einrichtung mindestens einen Prozessor und mindestens einen Speicher, der Computerprogrammcode beinhaltet, umfasst, wobei der mindestens eine Speicher und der Computerprogrammcode dazu ausgelegt sind, die Einrichtung mit dem mindestens einen Prozessor mindestens zu Folgendem zu veranlassen:
Bestimmen (90) einer Zellneuauswahl von einer alten Zelle zu einer ausgewählten Zelle an der Kommunikationsvorrichtung (20) in einem Funkressourcensteuerzwischenzustand, in dem die Kommunikationsvorrichtung (20) inaktiv, aber mit einem Funkzugangssystem verbunden ist;
nach dem Bestimmen Initiieren einer Kommunikation (93) von Sicherheitszugangsberechtigungsinformationen der alten Zelle mit der ausgewählten Zelle des Funkzugangssystems, während sich die Kommunikationsvorrichtung (20) im Funkressourcensteuerzwischenzustand befindet;
Kommunizieren (94) mit der ausgewählten Zelle auf Basis einer Sicherheitsauslegung gemäß den Sicherheitszugangsberechtigungsinformationen;
Durchführen einer zurückgestellten Sicherheitszugangsberechtigungsaktualisierung nach dem Bestimmen der Zellneuauswahl;
nach der Bestimmung der Zellneuauswahl Warten, bis Uplinkdaten vorhanden sind, die zur ausgewählten Zelle zu übertragen sind, und dann:
Signalisieren einer Anzeige an die ausgewählte Zelle, dass eine existierende Sicherheitsauslegung mit einer alten Zelle zu verwenden ist, und Verwenden der existierenden Sicherheitsauslegung für eine Sicherungskommunikation mit der ausgewählten Zelle,
Empfangen von Sicherheitsaktualisierungsinformationen von der ausgewählten Zelle, und
entsprechendes Aktualisieren der Sicherheitsauslegung.

2. Einrichtung nach Anspruch 1, die dazu ausgelegt ist, eine Zellaktualisierungsanforderung mit einem Ursachenwert, der eine Notwendigkeit einer Sicherheitsaktualisierung anzeigt, zu kommunizieren.

3. Einrichtung nach Anspruch 2, die ferner dazu ausgelegt ist, in der Zellaktualisierungsanforderung eine Anzeige einer alten Zelle, für die die Kommunikationsvorrichtung (20) eine Sicherheitsauslegung aufweist, und/oder eine existierende Sicherheitsauslegung zu kommunizieren.

4. Einrichtung (20) nach einem der Ansprüche 1 bis 3, die dazu ausgelegt ist, ein Funkzugangssystem zu betreiben, das ein Funkzugangsnetzwerk (RAN) einer 4. oder einer 5. Generation gemäß 3GPP-Spezifikationen umfasst, und wobei der Funkressourcensteuerzwischenzustand einen auslegbaren Zustand einer Funkressourcensteuerung (RRC) umfasst, der zwischen einem RRC-Ruhe- und einem RRC-Verbindungszustand gemäß den 3GPP-Spezifikationen definiert ist.

5. Einrichtung (20) nach einem der Ansprüche 1 bis 4, wobei die alte Zelle und die ausgewählte Zelle mit einem eNodeB verknüpft sind oder wobei die alte Zelle von einem ersten eNodeB bereitgestellt und die ausgewählte Zelle von einem zweiten eNodeB bereitgestellt wird.

6. Einrichtung (20) nach einem der Ansprüche 1 bis 5, die dazu ausgelegt ist, einen Nachrichtenauthentifizierungscode-für-Integrität(MAC-I)-Vektor zu verwenden, der auf Basis von Sicherheitszugangsberechtigungen berechnet wird, die von der Kommunikationsvorrichtung vor der Neuauswahl für eine Kommunikation von Sicherheitszugangsberechtigungsinformationen verwendet werden.

7. Einrichtung (20) nach einem der Ansprüche 1 bis 6, die dazu ausgelegt ist, nach dem Bestimmen der Zellneuauswahl eine Aktualisierung einer Sicherheitsauslegung anzufordern, während die existierende Sicherheitsauslegung für eine Sicherungskommunikation verwendet wird.

8. System, das Folgendes umfasst:
eine Einrichtung für eine Kommunikationsvorrichtung (20) nach einem der vorhergehenden Ansprüche; und
eine Einrichtung (30) für eine Netzwerkentität, die eine ausgewählte Zelle eines Funkzugangs für ein System bereitstellt, wobei die Einrichtung (30) mindestens einen Prozessor und mindestens einen Speicher, der Computerprogrammcode beinhaltet, umfasst, wobei der mindestens eine Speicher und der Computerprogrammcode dazu ausgelegt sind, die Einrichtung (30) mit dem mindestens einen Prozessor mindestens zu Folgendem zu veranlassen:
Empfangen (93) von Informationen der Sicherheitszugangsberechtigungsinformationen der alten Zelle mit der ausgewählten Zelle des Funkzugangssystems von der Kommunikationsvorrichtung (20), während sich die Kommunikationsvorrichtung (20) in einem Funkressourcensteuerzwischenzustand befindet, in dem die Kommunikationsvorrichtung (20) inaktiv, aber mit dem Funkzugangssystem verbunden ist; und
Veranlassen der Kommunikation (94) mit der Kommunikationsvorrichtung (20) im Funkressourcensteuerzwischenzustand auf Basis der Sicherheitsauslegung gemäß den Sicherheitszugangsberechtigungsinformationen.

9. Computerprogramm, das Anweisungen zum Veranlassen einer Einrichtung, mindestens Folgendes durchzuführen, umfasst:
Bestimmen (90) einer Zellneuauswahl von einer alten Zelle zu einer ausgewählten Zelle an einer Kommunikationsvorrichtung (20) in einem Funkressourcensteuerzwischenzustand, in dem die Kommunikationsvorrichtung (20) inaktiv, aber mit einem Funkzugangssystem verbunden ist;
nach dem Bestimmen Initiieren (93) einer Kommunikation von Sicherheitszugangsberechtigungsinformationen der alten Zelle mit der ausgewählten Zelle des Funkzugangssystems, während sich die Kommunikationsvorrichtung (20) im Funkressourcensteuerzwischenzustand befindet;
Kommunizieren (94) mit der ausgewählten Zelle auf Basis einer Sicherheitsauslegung gemäß den Sicherheitszugangsberechtigungsinformationen;
Durchführen einer zurückgestellten Sicherheitszugangsberechtigungsaktualisierung nach dem Bestimmen der Zellneuauswahl;
nach der Bestimmung der Zellneuauswahl Warten, bis Uplinkdaten vorhanden sind, die zur ausgewählten Zelle zu übertragen sind, und dann:
Signalisieren einer Anzeige an die ausgewählte Zelle, dass eine existierende Sicherheitsauslegung mit einer alten Zelle zu verwenden ist, und Verwenden der existierenden Sicherheitsauslegung für eine Sicherungskommunikation mit der ausgewählten Zelle,
Empfangen von Sicherheitsaktualisierungsinformationen von der ausgewählten Zelle, und
entsprechendes Aktualisieren der Sicherheitsauslegung.

## Revendications

1. Appareil pour un dispositif de communication (20), l'appareil comprenant au moins un processeur et au moins une mémoire comportant un code de programme informatique, l'au moins une mémoire et le code de programme informatique étant configurés pour, avec l'au moins un processeur, amener l'appareil à au moins :
déterminer (90) une resélection de cellule d'une ancienne cellule à une cellule sélectionnée au niveau du dispositif de communication (20) dans un état de contrôle de ressources radio intermédiaire où le dispositif de communication (20) est inactif mais connecté à un système d'accès radio ;
à la suite de la détermination, initier (93) une communication d'informations de justificatif d'identité de sécurité de l'ancienne cellule avec la cellule sélectionnée du système d'accès radio pendant que le dispositif de communication (20) est à l'état de contrôle de ressources radio intermédiaire ;
communiquer (94) avec la cellule sélectionnée sur la base d'une configuration de sécurité selon les informations de justificatif d'identité de sécurité ;
réaliser une mise à jour de justificatif d'identité de sécurité différée après la détermination de la resélection de cellule ;
après la détermination de la resélection de cellule, attendre qu'il y ait des données de liaison montante à transmettre à la cellule sélectionnée, et ensuite :
signaler à la cellule sélectionnée une indication selon laquelle une configuration de sécurité existante avec une ancienne cellule doit être utilisée, et utiliser la configuration de sécurité existante pour sécuriser les communications avec la cellule sélectionnée,
recevoir des informations de mise à jour de sécurité de la cellule sélectionnée, et
mettre à jour la configuration de sécurité en conséquence.

2. Appareil selon la revendication 1, configuré pour communiquer une demande de mise à jour de cellule avec une valeur de cause indiquant la nécessité d'une mise à jour de sécurité.

3. Appareil selon la revendication 2, configuré en outre pour communiquer, dans la demande de mise à jour de cellule, une indication d'une ancienne cellule pour laquelle le dispositif de communication (20) a une configuration de sécurité et/ou d'une configuration de sécurité existante.

4. Appareil (20) selon l'une des revendications 1 à 3, configuré pour fonctionner dans un système d'accès radio comprenant un réseau d'accès radio (RAN) de 4^{e} ou 5^{e} génération selon les spécifications 3GPP, et dans lequel l'état de contrôle de ressources radio intermédiaire comprend un état de contrôle des ressources radio (RRC) configurable défini entre un état RRC de repos et un RRC connecté selon les spécifications 3GPP.

5. Appareil (20) selon l'une des revendications 1 à 4, dans lequel l'ancienne cellule et la cellule sélectionnée sont associées à un eNodeB, ou dans lequel l'ancienne cellule est fournie par un premier eNodeB et la cellule sélectionnée est fournie par un deuxième eNodeB.

6. Appareil (20) selon l'une des revendications 1 à 5, configuré pour utiliser un code d'authentification de message pour un vecteur d'intégrité (MAC-I) calculé sur la base de justificatifs de sécurité utilisés par le dispositif de communication avant la resélection pour la communication d'informations de justificatif d'identité de sécurité.

7. Appareil (20) selon l'une des revendications 1 à 6, configuré pour demander, à la suite de ladite détermination de la resélection de cellule, une mise à jour d'une configuration de sécurité pendant que la configuration de sécurité existante est utilisée pour sécuriser les communications.

8. Système comprenant :
un appareil pour un dispositif de communication (20) selon l'une des revendications précédentes ; et
un appareil (30) pour une entité de réseau fournissant une cellule sélectionnée d'un accès radio pour le système, l'appareil (30) comprenant au moins un processeur et au moins une mémoire comportant un code de programme informatique, l'au moins une mémoire et le code de programme informatique étant configurés pour, avec l'au moins un processeur, amener l'appareil (30) à au moins :
recevoir (93) du dispositif de communication (20) des informations de justificatif d'identité de sécurité de l'ancienne cellule avec la cellule sélectionnée du système d'accès radio pendant que le dispositif de communication (20) est dans un état de contrôle de ressources radio intermédiaire où le dispositif de communication (20) est inactif mais connecté au système d'accès radio ; et
faire en sorte que ladite communication (94) avec le dispositif de communication (20) dans l'état de contrôle de ressources radio intermédiaire soit basée sur la configuration de sécurité selon les informations de justificatif d'identité de sécurité.

9. Programme informatique comprenant des instructions pour amener un appareil à réaliser au moins ce qui suit :
déterminer (90) une resélection de cellule d'une ancienne cellule à une cellule sélectionnée au niveau d'un dispositif de communication (20) dans un état de contrôle de ressources radio intermédiaire où le dispositif de communication (20) est inactif mais connecté à un système d'accès radio ;
à la suite de la détermination, initier (93) une communication d'informations de justificatif d'identité de sécurité de l'ancienne cellule avec la cellule sélectionnée du système d'accès radio pendant que le dispositif de communication (20) est à l'état de contrôle de ressources radio intermédiaire ;
communiquer (94) avec la cellule sélectionnée sur la base d'une configuration de sécurité selon les informations de justificatif d'identité de sécurité ;
réaliser une mise à jour de justificatif d'identité de sécurité différée après la détermination de la resélection de cellule ;
après la détermination de la resélection de cellule, attendre qu'il y ait des données de liaison montante à transmettre à la cellule sélectionnée, et ensuite :
signaler à la cellule sélectionnée une indication selon laquelle une configuration de sécurité existante avec une ancienne cellule doit être utilisée, et utiliser la configuration de sécurité existante pour sécuriser les communications avec la cellule sélectionnée,
recevoir des informations de mise à jour de sécurité de la cellule sélectionnée, et
mettre à jour la configuration de sécurité en conséquence.
